Europäisches Patentamt

European Patent Office

Office européen des brevets

(19)

(11) **EP 1 615 352 A1**

(12) **DEMANDE DE BREVET EUROPEEN**

(43) Date de publication:
**11.01.2006 Bulletin 2006/02**

(51) Int Cl.:
*H04B 7/005* (2006.01)

(21) Numéro de dépôt: **04291716.1**

(22) Date de dépôt: **07.07.2004**

(84) Etats contractants désignés:
**AT BE BG CH CY CZ DE DK EE ES FI FR GB GR
HU IE IT LI LU MC NL PL PT RO SE SI SK TR**
Etats d'extension désignés:
**AL HR LT LV MK**

(71) Demandeur: **FRANCE TELECOM
75015 Paris (FR)**

(72) Inventeurs:
• **Vignault, Emmanuelle
  92130 Issy les Moulineaux (FR)**
• **Lugara, Delphine
  75014 Paris (FR)**

(74) Mandataire: **Cabinet Martinet & Lapoux
  43, boulevard Vauban,
  B.P. 405 Guyancourt
  78055 St. Quentin Yvelines Cédex (FR)**

(54) **Estimation de puissance d'émission sans macrodiversité dans un réseau CDMA**

(57)    Lorsqu'une station de base donnée (B) est supposée seule avoir un lien actif descendant avec un mobile (TM) dans un réseau CDMA (RR), un estimateur de puissance estime la puissance d'émission sans macrodiversité de la station de base donnée en fonction de l'atténuation déterminée dans le mobile relative au lien actif avec la station de base donnée et d'une somme de rapports proportionnels chacun à la puissance d'émission de station de base déterminée pour l'un respectif de liens actifs entre des stations de base ($B_i$) et le mobile et inversement proportionnel à l'atténuation déterminée dans le mobile pour le lien actif respectif. Ces estimations sont déterminées lorsque le réseau est opérationnel avec macrodiversité. Un centre de maintenance (OMC) surveille la capacité radio consommée par les mobiles en macrodiversité de tous les liens descendants dans le réseau.

FIG. 1

EP 1 615 352 A1

**Description**

La présente invention concerne une estimation de puissance d'émission de stations de base dans un réseau de radiocommunication cellulaire numérique à accès multiple à répartition par codes AMRC, en anglais CDMA (Coded Division Multiple Access), utilisant la macrodiversité.

Dans un réseau CDMA, la macrodiversité permet à un terminal radio mobile d'usager, dit "mobile", d'échanger simultanément des données avec plusieurs stations de base du réseau. Elle est généralement utilisée à proximité de la frontière entre plusieurs cellules du réseau.

Grâce à la macrodiversité, la puissance d'émission du mobile est diminuée. La macrodiversité peut également parfois induire une baisse de la puissance des stations de base.

Le gain de macrodiversité en terme de gain de puissance a surtout été évalué suivant le sens montant d'un mobile vers une station de base. Suivant le sens descendant d'une station de base donnée vers un mobile, quelques études ont été réalisées soit selon une approche théorique, soit selon des résultats de simulation.

Une évaluation de puissance, qui semble unique actuellement, conduit à estimer de manière théorique l'écart de puissance radio consommée pour un mobile avec et sans macrodiversité. Cette évaluation de puissance est divulguée dans l'article "DOWNLINK SOFT HANDOVER GAIN IN UMTS NETWORKS UNDER DIFFERENT POWER CONTROL CONDITIONS" de Y. Chen et L. G. Cuthbert, 3G Mobile Communication Technologies, 2002, Third International Conference, 8-10 May 2002, pages 47-51, et dans l'article "Downlink Performance of Different Soft Handover Algorithms In 3G Multi-Service Environments" de Y. Chen et L. G. Cuthbert, Mobile and Wireless Communications Network, 2002, 4th International Workshop, 9-11 Sept. 2002, pages 406-410. Ces articles présentent des calculs théoriques de puissances des stations de base, sans macrodiversité et avec macrodiversité à deux ou trois stations.

Les deux puissances d'émission de station de base suivantes sont évaluées :

- $P_{noMD}$ : puissance d'émission d'une station de base donnée suivant le sens descendant relativement à un mobile supposé fonctionner sans macrodiversité avec la station de base donnée d'indice 1 ; et
- $P_i$ : puissance d'émission de l'une de plusieurs stations de base d'indices i, voisines de la station de base donnée et servant le mobile supposé fonctionner en macrodiversité avec lesdites plusieurs stations de base.

Pour évaluer la puissance d'émission requise sans macrodiversité, on suppose que le contrôle de puissance est parfait pour un mobile qui ne fonctionne pas en macrodiversité et qui a un unique lien descendant avec la station de base donnée d'indice 1. Le rapport cible (t = target) utilisé dans le contrôle de puissance entre l'énergie par bit $E_b$ dans un canal de trafic reçue par le mobile et la densité spectrale de puissance d'interférence $I_0$, pour l'un de plusieurs services considérés offerts avec des débits différents dans le réseau CDMA, tels que la téléphonie (voix), la vidéophonie et la transmission d'images fixes, de messages courts SMS ou de messages multimédias MMS, s'écrit:

$$\left(\frac{E_b}{I_0}\right)_t = \frac{W}{vR} \cdot \frac{P_1' \,/\, PL_1}{\left(P_1'^{Tot} - P_1'\right)\alpha \,/\, PL_1 + \sum_{i=2}^{N_{BS}} P_i'^{Tot} \,/\, PL_i} \qquad (1)$$

dans laquelle

W/R est un gain d'étalement entre le débit d'éléments de code (chips) W et le débit de bit de service R, v est un facteur d'activité inférieur ou égal à 1, $P_i'$ est la puissance d'émission suivant le sens descendant d'un lien alloué au mobile par l'une de $N_{BS}$ stations de base voisines dont les émissions peuvent interférer et qui couvrent une zone d'influence où le mobile fonctionnant sans macrodiversité peut établir le lien descendant, avec $1 \leq i \leq N_{BS}$, l'indice 1 désignant la station de base donnée,

$PL_i$ est l'atténuation entre le mobile et la station de base d'indice i,

$\alpha$ est un facteur d'orthogonalité inférieur à 1 entre codes de liens descendants, et

$P_i'^{Tot}$ est la puissance totale de la station de base d'indice i, dans le cas où le mobile n'est pas en macrodiversité.

La puissance consommée pour le mobile peut être alors écrite en fonction de mesures disponibles dans le réseau, en prenant en compte toutes les stations de base de la zone d'influence autour de la station de base d'indice 1.

En supposant que la puissance consommée $P_i'$ pour le mobile est très inférieure à la puissance totale $P_i^{'Tot}$ de la station de base donnée, et en supposant que toutes les stations de base émettent à la même puissance totale, soit $P_i^{'Tot} \approx P^{'Tot}$, on déduit de la relation (1) :

$$P_{noMD} = (vR/W) \cdot (E_b/I_0)_t \cdot P^{'Tot} \cdot (\alpha + \sum_{i=2}^{N_{BS}} PL_1 / PL_i) \qquad (2)$$

Pour évaluer la puissance d'émission requise en macrodiversité entre deux stations voisines d'indice 1 et 2, le rapport cible (t = target) utilisé dans le contrôle de puissance vu par le mobile peut s'écrire:

$$(E_b/I_0)_t = (E_b/I_0)_1 + (E_b/I_0)_2, \qquad (3)$$

avec $(E_b/I_0)_i$, une grandeur reçue par le mobile sur chacun des liens descendants.

En réécrivant la relation (1) pour la station de base d'indice 2, on obtient :

$$\left(\frac{E_b}{I_0}\right)_2 = \frac{W}{vR} \cdot \frac{P_2' / PL_2}{(P_2^{'Tot} - P_2')\alpha / PL_2 + \sum_{\substack{i=1 \\ i \neq 2}}^{N_{BS}} P_i^{'Tot} / PL_i} \qquad (4)$$

Les puissances d'émission des stations de base ayant des liens descendants avec un même mobile peuvent être maintenues voisines les unes des autres, ce qui conduit à:

$P_1 = P_2$ désignées dans la suite par $P_1$.

$P_i$ est la puissance d'émission pour le mobile considéré suivant le sens descendant dans la station de base i lorsqu'il y a macrodiversité.

En transposant les relations (1) et (4) à la macrodiversité selon la relation (3), on obtient le rapport cible selon la relation suivante (5) :

$$\left(\frac{E_b}{I_0}\right)_t = \frac{W}{vR} \cdot P_1 \cdot \left( \frac{1}{\left(P_1^{Tot} - P_1\right)\alpha + \sum_{i=2}^{N_{BS}}\left(P_i^{Tot} PL_1 / PL_i\right)} + \frac{1}{\left(P_2^{Tot} - P_1\right)\alpha + \sum_{\substack{i=1 \\ i \neq 2}}^{N_{BS}}\left(P_i^{Tot} PL_2 / PL_i\right)} \right)$$

$P_i^{Tot}$ est la puissance totale d'émission de la station de base d'indice i lorsque le mobile est en macrodiversité.

On peut donc en déduire la puissance sur chacun des liens descendants.

La charge radio est ensuite supposée répartie uniformément parmi les stations de base du réseau considéré. Toutes les stations de base émettent donc à la même puissance totale d'émission $P^{Tot}$ ce qui implique $P_i^{Tot} \approx P^{Tot}$. Les stations de base sont également supposées chargées, ce qui implique $P_i \ll P^{Tot}$.

La relation (5) devient alors :

$$\left(\frac{E_b}{I_0}\right)_t = \frac{W}{vR} \cdot P_1 \cdot \left( \frac{1}{P^{Tot}\alpha + P^{Tot}\sum_{i=2}^{N_{BS}}\left(PL_1 / PL_i\right)} + \frac{1}{P^{Tot}\alpha + P^{Tot}\sum_{\substack{i=1\\i\neq 2}}^{N_{BS}}\left(PL_2 / PL_i\right)} \right)$$

On en déduit qu'en macrodiversité la puissance d'émission d'une station sur le sens descendant vaut : (6)

$$P_1 = \frac{vR}{W} \cdot \left(\frac{E_b}{I_0}\right)_t \cdot P^{Tot} \cdot \frac{1}{\frac{1}{\alpha + \sum_{i=2}^{N_{BS}}\left(PL_1 / PL_i\right)} + \frac{1}{\alpha + \sum_{\substack{i=1\\i\neq 2}}^{N_{BS}}\left(PL_2 / PL_i\right)}}$$

On dispose ainsi de la puissance d'émission $P_{noMD}$ d'une station selon la relation (2) si le mobile ne fonctionne pas en macrodiversité et de la puissance d'émission $P_1$ pour le lien descendant de chacune des stations avec lesquelles le mobile fonctionne en macrodiversité.

Trois procédés pourraient être préconisés pour évaluer le gain de macrodiversité.

Selon un premier procédé, des mesures d'atténuations et de puissances faites dans le réseau CDMA conjointement avec une estimation du facteur d'orthogonalité $\alpha$ servent à estimer des puissances avec et sans macrodiversité. Pour cela, les relations (2) et (6) sont utilisées.

Pour le premier procédé, on doit disposer de mesures d'atténuations et de puissances dans les $N_{BS}$ stations de la zone d'influence ce qui est difficile à mettre en oeuvre à cause du nombre élevé $N_{BS}$ de stations de base à considérer.

Le mobile doit transmettre vers la partie fixe du réseau les atténuations $PL_i$ d'un grand nombre de stations de base, c'est-à-dire toutes les stations de base de la zone d'influence, qu'elles soient actives ou non. Les puissances calculées théoriquement par le premier procédé utilisent donc des données qui ne peuvent pas être facilement récupérées sur le réseau.

Les hypothèses ci-dessus sont beaucoup trop éloignées du fonctionnement réel du réseau. Les puissances d'émission totales sont en réalité différentes d'une station de base à l'autre, et la charge radio du réseau n'est pas uniformément distribuée dans les stations de base.

Un deuxième procédé de mesure du gain de macrodiversité consiste à mesurer les puissances dans les différents cas de macrodiversité. Les différentes puissances d'émission d'une, puis deux, puis trois jusqu'à la totalité des stations de base actives pour les différents cas de macrodiversité sont mesurées le long d'un même parcours.

Le deuxième procédé a pour inconvénient qu'il est inapplicable à un réseau opérationnel, parce qu'il faut soit éteindre des stations de base, soit désactiver la macrodiversité.

Les documents précités proposent selon un troisième procédé d'évaluer le gain de macrodiversité en calculant la diminution globale de la puissance émise sur les liens descendants de toutes les stations de base dans le réseau.

A partir des mesures d'atténuations et de puissances et de la relation (2) est obtenue la puissance sans macrodiversité $P_{noMD}$ que tous les mobiles du réseau nécessiteraient dans la station de base donnée. En sommant les puissances sans macrodiversité, on obtient la capacité radio du réseau sans macrodiversité.

Outre des inconvénients analogues à ceux du premier procédé, le troisième procédé présente les inconvénients suivants.

A partir des mesures d'atténuations et de puissances et de la relation (6) sont obtenues les puissances $P_i$ que tous les mobiles du réseau nécessiteraient dans les stations de base dans le cas avec macrodiversité. En sommant ces puissances, on obtient la capacité radio du réseau avec macrodiversité.

Pour optimiser la macrodiversité en considérant la capacité radio du réseau, l'opérateur du réseau doit pouvoir évaluer mobile par mobile le gain en puissance suivant le sens descendant sans supposer que la charge radio est uniformément répartie dans le réseau.

Estimer des gains macroscopiques de macrodiversité ne correspond pas du tout aux besoins d'optimisation fine du réseau. En effet, un gain plus ou moins important selon les mobiles peut être masqué par cette somme globale de puissance.

La présente invention a pour **objectif** d'estimer la puissance d'émission sans macrodiversité de chaque station de base et par suite le gain de macrodiversité pour cette station de base relativement au lien descendant actif avec tout mobile dans un réseau opérationnel, sans modifier le fonctionnement normal des stations de base en exploitation et donc sans désactiver la macrodiversité.

L'estimation de puissance d'émission sert à optimiser la macrodiversité en tenant compte de la capacité du réseau et en évaluant mobile par mobile le gain en puissance suivant le sens descendant, sans supposer que la charge radio est uniformément répartie dans le réseau.

A cette fin, un procédé pour estimer la puissance d'émission sans macrodiversité d'une station de base donnée lorsque cette dernière est supposée seule avoir un lien actif descendant avec un mobile dans un réseau de radiocommunication opérationnel du type CDMA, selon lequel des atténuations entre des stations de base et le mobile sont déterminées dans le mobile, et des stations de base déterminent des puissances d'émission,
est caractérisé en ce que les stations de base pour lesquelles des atténuations sont déterminées dans le mobile sont relatives à des liens actifs avec le mobile afin que seules ces stations de base déterminent des puissances d'émission pour lesdits liens actifs et les transmettent à un moyen d'estimation de puissance relié au réseau de radiocommunication et le mobile ne transmette que les atténuations déterminées pour lesdits liens actifs au moyen d'estimation de puissance, et le moyen d'estimation de puissance estime la puissance d'émission sans macrodiversité en fonction de l'atténuation déterminée dans le mobile relative au lien actif avec la station de base donnée et d'une somme de rapports proportionnels chacun à la puissance d'émission déterminée pour l'un respectif desdits liens actifs et inversement proportionnel à l'atténuation déterminée pour le lien actif respectif.

La puissance d'émission sans macrodiversité allouée à chaque mobile par une station de base est ainsi estimée dans un réseau opérationnel sans désactiver la macrodiversité ni éteindre des stations de base. A l'aide des puissances récupérées suivant le sens descendant dans le réseau et de puissance d'émission sans macrodiversité, le gain en capacité de la macrodiversité suivant le sens descendant est évalué. Cette évaluation est réalisée mobile par mobile de manière à analyser au cas par cas si la macrodiversité est justifiée.

Cette estimation est en outre basée sur des mesures d'atténuations ou de puissances de réception transmises par chaque mobile au moyen d'estimation de puissance lié à la partie fixe du réseau, pour un minimum de cellules associées seulement aux stations de base ayant des liens actifs avec le mobile. Ainsi un logiciel d'estimation de puissance d'émission implémenté pour partie dans les mobiles et pour partie dans un centre de maintenance du réseau permet de déterminer simplement pour un mobile donné l'impact de la macrodiversité sur la capacité du réseau suivant le sens descendant.

Selon une première réalisation, la puissance d'interférence pour chaque lien actif avec le mobile est supposée sensiblement égale à la puissance d'interférence reçue par le mobile fonctionnant sans macrodiversité, et la puissance d'émission sans macrodiversité est le produit de l'atténuation relative au lien actif entre la station de base donnée et le mobile et d'une somme de rapports chacun égal à la puissance d'émission déterminée pour l'un respectif desdits liens actifs avec lesdites stations de base sur l'atténuation déterminée pour le lien actif respectif.

Selon une deuxième réalisation de l'invention, chaque station de base ayant un lien actif avec le mobile détermine sa puissance totale d'émission $P_j^{Tot}$ et la transmet avec la puissance d'émission $P_i$ pour le lien actif avec le mobile au moyen d'estimation de puissance, le mobile détermine également la puissance totale $R_{MD}$ reçue dans la bande de fréquence d'émission des stations de base reçue par le mobile et la transmet avec les atténuations $PL_i$ déterminées pour lesdits liens actifs et l'atténuation $PL_B$ relative au lien actif avec la station de base donnée au moyen d'estimation de puissance, et le moyen d'estimation de puissance estime la puissance d'émission sans macrodiversité selon la formule suivante :

$$P_{noMD} = \sum_{i=1}^{N_{AS}} P_i \, \frac{PL_B R_{MD} + (\alpha - 1)P_B^{Tot}}{PL_i R_{MD} + (\alpha - 1)P_i^{Tot}}$$

où $N_{AS}$ désigne le nombre de liens actifs entre le mobile et lesdites stations de base, $P_B^{Tot}$ la puissance d'émission totale de la station de base donnée lorsque le mobile est en macrodiversité et transmise par la station de base donnée au moyen d'estimation de puissance, et $\alpha$ un facteur d'orthogonalité entre codes de lien prédéterminé inférieur à 1.

L'invention concerne également un moyen d'estimation de puissance pour la mise en oeuvre du procédé selon l'invention, ainsi qu'un programme d'ordinateur sur un support d'informations, comportant des instructions de programme adaptées à la mise en oeuvre du procédé selon l'invention, lorsque ledit programme est chargé et exécuté dans le moyen d'estimation de puissance.

D'autres caractéristiques et avantages de la présente invention apparaîtront plus clairement à la lecture de la description suivante de plusieurs réalisations préférées de l'invention, données à titre d'exemples non limitatifs, en référence aux **dessins** annexés correspondants dans lesquels :

- la figure 1 est un bloc-diagramme schématique d'un système d'estimation de puissance d'émission selon l'invention ;
- la figure 2 est un algorithme du procédé d'estimation de puissance d'émission sans macrodiversité selon les première et deuxième réalisations de l'invention ; et
- la figure 3 est un bloc-diagramme schématique d'une variante du système d'estimation de puissance d'émission selon l'invention.

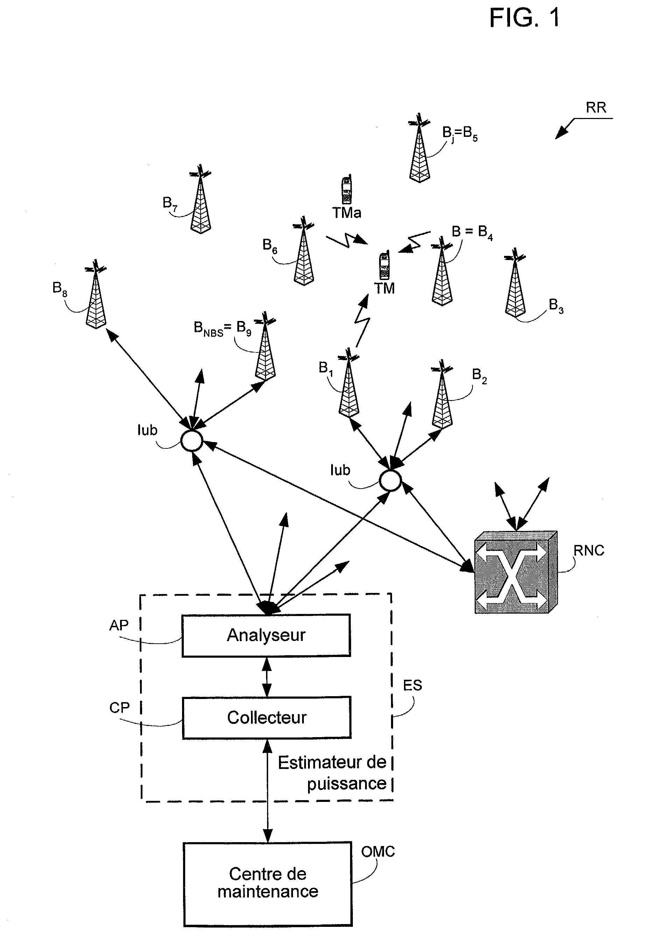

La figure 1 montre les principaux moyens fonctionnels inclus dans un **système d'estimation** de puissance d'émission pour la mise en oeuvre du procédé de l'invention dans un réseau de radiocommunication cellulaire numérique RR du type CDMA.

Le système d'estimation estime périodiquement les puissances d'émission sans macrodiversité des stations de base B dans le réseau RR. L'estimation de puissance d'émission étant identique pour toutes les stations de base B du réseau RR, le procédé selon l'invention est décrit en détail ci-après pour estimer la puissance d'émission sans macrodiversité $P_{noMD}$ d'une station de base donnée B lorsque cette dernière est supposée seule avoir un lien actif descendant avec un terminal radio mobile d'usager TM dans le réseau RR. Le terminal mobile est classique et peut être aussi un assistant numérique personnel communicant ou un ordinateur portable communicant. Le terminal mobile est adapté au type du réseau RR, par exemple à large bande du type FDD W-CDMA (Frequency Division Duplex Wideband-CDMA) selon la troisième génération (3GPP) de réseaux du type UMTS. Par la suite, le terminal mobile est appelé plus simplement "mobile" TM.

Comme montré à la figure 1, la station de base donnée B est située dans le voisinage de $N_{BS}$ stations de base voisines $B_j$ avec l'indice j tel que $j \in \{1, N_{BS}\}$. Une station de base $B_j$ est dite voisine de la station de base donnée B lorsque la station de base voisine $B_j$ est située dans un rayon prédéterminé autour de la station de base donnée, et la station de base donnée reçoit une puissance d'interférence d'un mobile situé à la station $B_j$ telle que le rapport signal à interférence CIR (Carrier-to-Interference Ratio) dans la station donnée est supérieur à un rapport signal à interférence minimal prédéterminé. Le nombre $N_{BS}$ de stations voisines varie ainsi d'une station à l'autre en dépendance de la topographie du terrain avoisinant la station donnée B et peut être de l'ordre de 2 à quelque dizaines environ.

Dans une réalisation plus étendue, $N_{BS}$ est le nombre de stations de base dans le réseau RR.

Selon l'exemple illustré à la figure 1, la station de base donnée B est la station $B_4$ associée à $N_{BS} = 6$ stations voisines $B_1$, $B_2$, $B_3$, $B_5$, $B_6$ et $B_9$ dont deux $B_1$ et $B_6$ ont des liens actifs descendants avec le mobile TM à un instant quelconque.

Lorsque le mobile TM d'un usager est sous la couverture radioélectrique de la station de base donnée B et ne communique qu'avec celle-ci, il fonctionne **sans macrodiversité (noMD).**

En fonctionnement sans macrodiversité, le rapport signal à interférence CIR, c'est-à-dire le rapport de la puissance ($P_{noMD}$ / $PL_B$) reçue par le mobile TM sur la puissance d'interférence $I_{noMD}$ reçue par le mobile TM, est supérieur ou égal à un rapport signal à interférence cible (t = target) tel que :

$$(C/I)_t = P_{noMD} \ / \ (PL_B \ I_{noMD}) \qquad\qquad (7).$$

Le rapport signal à interférence cible $(C/I)_t$ est une limite inférieure en deçà de laquelle le mobile TM ne reçoit plus une puissance suffisante de la station B pour traiter convenablement un signal émis par la station B. Dans le rapport précédent :

$P_{noMD}$ est la puissance d'émission de la station de base donnée B pour le canal de trafic alloué au mobile TM et pour le lien de communication descendant (downlink) depuis la station B vers le mobile TM ;

$PL_B$ est une atténuation égale au rapport de la puissance d'émission de la station de base donnée B pour le canal pilote CPICH sur la puissance de champ radioélectrique reçue par le mobile TM pour ce canal pilote CPICH. Elle est déterminée par une application logicielle d'estimation de puissance incluse dans le mobile TM ; et

$I_{noMD}$ est la puissance d'interférence reçue par le mobile TM fonctionnant sans macrodiversité, relativement aux émissions des $N_{BS}$ stations de base voisines $B_j$ et aux émissions de la station de base donnée B pour d'autres canaux de trafic alloués à d'autres mobiles TMa que le mobile TM.

Lorsque le mobile TM communique avec $N_{AS}$ stations de base dont la station de base donnée B, il fonctionne en **macrodiversité (MD).** Les $N_{AS}$ stations de base sont des stations voisines à la station de base donnée B, avec $N_{BS} \geq N_{AS} \geq 1$, et sont dites stations actives puisqu'elles présentent chacune un lien de communication descendant (downlink) actif vers le mobile TM.

Le rapport signal à interférence cible s'écrit:

$$(C/I)_t = \overset{N_{AS}}{\underset{i=1}{\sum}} P_i/(PL_i\, I_i) \qquad\qquad (8),$$

où $P_i$ est la puissance d'émission de la station de base $B_i$ pour le lien de communication descendant actif depuis la station $B_i$ vers le mobile TM ;

$PL_i$ est supérieur à 1 et est une atténuation relative au lien actif précédent et égale au rapport de la puissance d'émission de la station $B_i$ pour le canal pilote CPICH sur la puissance de champ radio électrique reçue par le mobile TM sur ce canal pilote CPICH ; elle est également déterminée par l'application d'estimation de puissance incluse dans le mobile TM ; on notera que contrairement à la technique antérieure, les atténuations $PL_i$ dans le rapport signal à interférence cible sont relatives aux $N_{AS}$ stations de base actives $B_i$, pour le mobile TM selon une exploitation réelle du réseau RR, et non à toutes les $N_{BS}$ stations de base voisines $B_j$ dans la zone d'influence de la station B ; et

$I_i$ est la puissance d'interférence reçue par le mobile TM fonctionnant en macrodiversité, relativement à l'interférence dans le lien actif de la station de base active $B_i$ perturbé par les émissions de stations de base voisines de la station $B_i$ et par les émissions de la station $B_i$ pour d'autres liens de communication descendants actifs avec d'autres mobiles TMa que le mobile TM.

En supposant que le rapport signal à interférence cible est le même sans macrodiversité (noMD) et en macrodiversité (MD), l'égalité des rapports (7) et (8) conduit à déduire la puissance d'émission sans macrodiversité $P_{noMD}$ de la station de base donnée B:

$$P_{noMD} = PL_B \overset{N_{AS}}{\underset{i=1}{\sum}} (P_i/PL_i)(I_{noMD}/I_i) \qquad\qquad (9).$$

La puissance d'émission sans macrodiversité $P_{noMD}$ est estimée selon deux réalisations du procédé d'estimation de puissance d'émission selon l'invention décrites ci-après.

A cet égard, le système d'estimation de puissance d'émission comprend un estimateur de puissance ES comprenant un analyseur de puissance AP et un collecteur de puissances analysées CP, comme montré à la figure 1.

L'estimateur de puissance ES est inclus dans la partie fixe du réseau de radiocommunication cellulaire RR par exemple de type UMTS. L'analyseur de puissance AP est relié à des interfaces terrestres Iub entre des contrôleurs de station de base RNC (Radio Network Controller) et les stations de base desservies par ces contrôleurs, de manière à prélever des puissances et des atténuations précisées ci-après transmises cycliquement dans des canaux de signalisation par les mobiles ayant des liens actifs avec les stations de base desservies.

Le collecteur de puissances analysées CP est relié à au moins un centre de maintenance OMC (Operation and Maintenance Center) ou au moins une plateforme de capture de signalisation du réseau de radiocommunication RR de manière à exploiter les puissances consommées par les stations de base du réseau et estimées sans macrodiversité et en macrodiversité.

Selon la **première réalisation** de l'invention, on suppose $I_i \approx I_{noMD}$. Cela revient à supposer que l'interférence générée sur un lien actif par les autres liens actifs du mobile TM est négligeable par rapport à l'interférence totale reçue par le mobile TM.

Pour que l'analyseur de puissance AP estime cycliquement à une étape E13 la puissance d'émission $P_{noMD}$ qu'aurait la station de base donnée B sans macrodiversité, par la formule suivante déduite de la relation (9) :

$$P_{noMD} \approx \left(\overset{N_{AS}}{\underset{i=1}{\sum}} C_i\right).PL_B = \left(\overset{N_{AS}}{\underset{i=1}{\sum}} P_i/PL_i\right).PL_B,$$

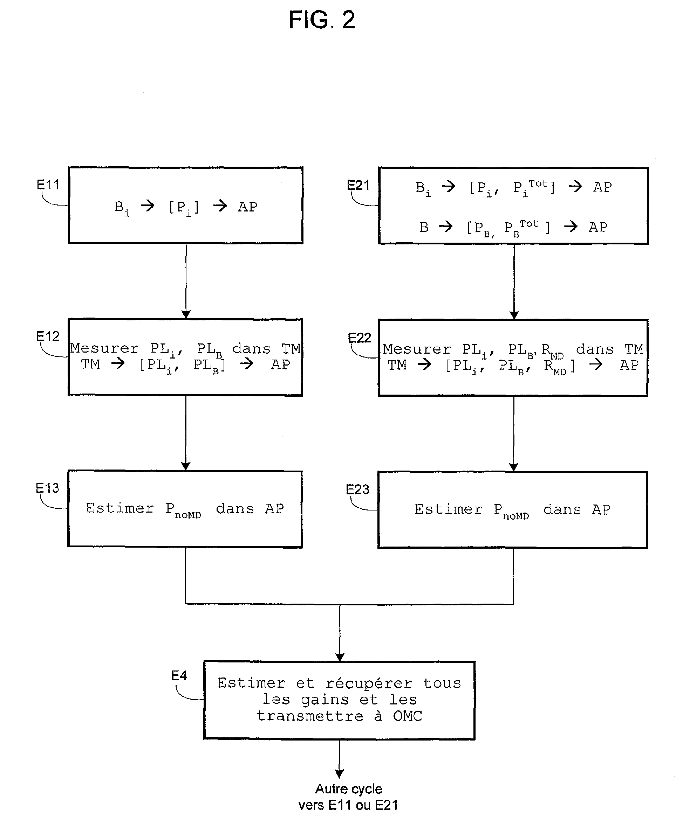

les variables $P_i$, $PL_i$ et $PL_B$ sont déterminées dans des étapes E11 et E12 précédant l'étape E13 pendant un cycle d'estimation de puissance, comme montré à gauche dans la figure 2.

A l'étape E11, la station de base $B_i$ voisine de la station de base donnée B transmet la puissance d'émission $P_i$ allouée au lien de communication descendant actif depuis la station $B_i$ vers le mobile TM lorsqu'il fonctionne en macrodiversité, à l'analyseur de puissance AP via une interface Iub ; l'indice i varie de 1 à $N_{AS}$.

A l'étape E12, une application d'estimation d'atténuation implémentée dans le mobile TM mesure des puissances et détermine les atténuations $PL_i$ relatives aux liens descendants actifs entre les $N_{AS}$ stations $B_i$ et le mobile TM, et donc y compris l'atténuation $PL_B$ supérieure à 1 et égale au rapport de la puissance d'émission de la station de base donnée B sur la puissance de champ radioélectrique reçue par le mobile TM lorsqu'il fonctionne en macrodiversité avec la station B ; les atténuations $PL_i$ et l'atténuation $PL_B$ sont transmises par le mobile TM à l'analyseur de puissance AP via les stations de base $B_i$ et leurs interfaces Iub.

Selon la **deuxième réalisation** de l'invention, la puissance d'interférence $I_i$ reçue par le mobile TM fonctionnant en macrodiversité et ayant un lien actif avec la station de base $B_i$ est la somme :

- des puissances d'interférences intracellulaires, dites également puissances d'interférences intrastations, dont la somme est désignée par $(P_i^{Tot} - P_i)/PL_i$ et qui sont dues aux autres liens descendants actifs depuis la station de base $B_i$ avec d'autres mobiles TMa que le mobile TM, dépendant linéairement d'un facteur d'orthogonalité $\alpha$ pour liaison descendante tel que $\alpha \in [0, 1]$, $\alpha$ étant égal à 0 lorsque l'orthogonalité est parfaite entre les codes des liens descendants et égal à 1 lorsqu'il n'y a aucune orthogonalité entre les codes des liens descendants; et
- des puissances d'interférences intercellulaires, dites également puissances d'interférences interstations, dues aux liens descendants actifs depuis les $N_{BS}$ stations de base $B_j$ voisines de la station de base $B_i$ et pouvant perturber et donc interférer avec le lien actif entre la station de base donnée $B_i$ et le mobile TM, avec $j \in \{1, N_{BS}\}$;
- et de la puissance de bruit thermique $N_{th}$ dans un lien actif ;

soit :

$$I_i = \alpha \, (P_i^{Tot} - P_i)/PL_i + \sum_{\substack{j=1 \\ j \neq i}}^{N_{BS}} P_j^{Tot} / PL_j + N_{th}.$$

où $P_j^{Tot}$ est la puissance totale d'émission de la station de base $B_j$, lorsque le mobile fonctionne en macrodiversité.

La relation précédente est équivalente à :

$$I_i = R_{MD} + (\alpha - 1) P_j^{Tot}/PL_i - \alpha \, P_i/PL_i \qquad (10)$$

en posant

$$R_{MD} = \sum_{j=1}^{N_{BS}} P_j^{Tot} / PL_j + N_{th}.$$

De la même façon par rapport à la station de base donnée B, lorsque le mobile TM ne fonctionne pas en macrodiversité, la puissance d'interférence $I_{noMD}$ reçue par le mobile TM qui n'a un lien actif qu'avec la station de base B est la somme de :

$$I_{noMD} = \alpha(P_B^{'Tot} - P_{noMD})/PL_B + \sum_{\substack{j=1 \\ j \neq B}}^{N_{BS}} P_j^{'Tot} / PL_j + N_{th}.$$

où $P_j^{'Tot}$ est la puissance totale d'émission de la station de base $B_j$ lorsque le mobile TM ne fonctionne pas en macrodiversité.

La relation précédente est équivalente à :

$$I_{noMD} = R_{noMD} + (\alpha - 1)P_B{}^{'Tot}/PL_B - \alpha P_{noMD}/PL_B \qquad (11)$$

en posant

$$R_{noMD} = \sum_{j=1}^{N_{BS}} P_j{}^{'Tot} / PL_j + N_{th}.$$

Pour la deuxième réalisation, on suppose que la puissance d'émission $P_i$ de la station de base $B_i$ pour le lien de communication descendant actif depuis la station $B_i$ vers le mobile TM est négligeable par rapport à la puissance d'émission totale $P_i{}^{Tot}$ de la station de base $B_i$, et que la puissance d'émission $P_{noMD}$ de la station de base donnée B pour le lien de communication descendant depuis la station B vers le mobile TM est négligeable par rapport à la puissance d'émission totale $P_B{}^{'Tot}$ de la station de base B lorsque le mobile ne fonctionne pas en macrodiversité. Les relations (10) et (11) deviennent

$$I_i \cong R_{MD} + (\alpha - 1)P_i{}^{Tot}/PL_i \qquad (12)$$

$$I_{noMD} \cong R_{noMD} + (\alpha - 1)P_B{}^{'Tot}/PL_B \qquad (13).$$

Les hypothèses ci-dessus $P_i \ll P_i{}^{Tot}$ et $P_{noMD} \ll P_B{}^{'Tot}$ signifient que la puissance totale $P_i{}^{Tot}$ de toute station de base $B_j$, y compris la station de base donnée B, lorsque le mobile fonctionne en macrodiversité est sensiblement égale à la puissance totale $P_j{}^{'Tot}$ de la station de base $B_j$ lorsque le mobile TM ne fonctionne pas en macrodiversité. En d'autres termes, la puissance supplémentaire du mobile TM liée au fonctionnement sans macrodiversité est négligeable dans la station de base donnée B. L'approximation précédente de puissances implique l'approximation suivante :

$$P_i{}^{Tot} \cong P_i{}^{'Tot} \text{ et } P_B{}^{Tot} \cong P_B{}^{'Tot},$$
$$\text{soit : } R_{MD} \cong R_{noMD}. \qquad (14)$$

Avec cette approximation, la puissance d'émission sans macrodiversité $P_{noMD}$ pour la station de base donnée B est estimée cycliquement par l'analyseur de puissance AP à une étape E23, en remplaçant $I_i$ et $I_{noMD}$ selon les relations (12) et (13) dans la relation (9) :

$$P_{noMD} = \sum_{i=1}^{N_{AS}} P_i \frac{PL_B R_{MD} + (\alpha - 1)P_B{}^{Tot}}{PL_i R_{MD} + (\alpha - 1)P_i{}^{Tot}} \qquad (15)$$

Les variables $P_i$, $P_i{}^{Tot}$, $P_B{}^{Tot}$, $PL_B$, $PL_i$ et $R_{MD}$ sont déterminées dans des étapes E21 et E22 précédant l'étape E23 pendant un cycle d'estimation de puissance, comme montré à droite dans la figure 2.

A l'étape E21, la station de base $B_i$ voisine de la station de base donnée B transmet la puissance d'émission $P_i$ allouée au lien de communication descendant actif depuis la station $B_i$ vers le mobile TM lorsqu'il fonctionne en macrodiversité, à l'analyseur de puissance AP via une interface Iub ; l'indice i varie de 1 à $N_{AS}$. La station de base $B_i$ transmet également la puissance d'émission totale $P_i{}^{Tot}$ de la station de base $B_i$ qui a un lien actif avec le mobile TM. Les puissances $P_i$ et $P_i{}^{Tot}$ sont transmises par les stations de base $B_i$, y compris la station de base donnée B, via des interfaces Iub à l'analyseur de puissance AP.

A l'étape E22, outre les atténuations $PL_i$, y compris l'atténuation $PL_B$, relatives aux liens descendants actifs entre les $N_{AS}$ stations $B_i$ et le mobile TM, comme dans la première réalisation, le mobile TM mesure des puissances et détermine la puissance totale $R_{MD}$ reçue dans la bande de fréquence utile par le mobile TM. L'atténuation $PL_B$ et les atténuations $PL_i$ et la puissance $R_{MD}$ sont transmises par le mobile TM à l'analyseur de puissance AP via les stations de base $B_i$ et leurs interfaces Iub.

L'analyseur estime des gains $G_1$ et $G_2$, définis ci-après, en même temps que la puissance $P_{noMD}$. A une étape E4, dans chacune des première et deuxième réalisations, le collecteur CP récupère les puissances $P_{noMD}$ et les gains $G_1$ et $G_2$ de toutes les stations de base du réseau de radiocommunication cellulaire opérationnel RR, sans désactiver la macrodiversité ni éteindre des stations de base.

Par exemple, pour chacun des mobiles actifs, une application d'estimation de puissance d'émission dans l'analyseur estime l'un des gains suivants, ou les deux gains suivants :

-  le gain $G_1 = P_{noMD}/P_B$ relatif à la puissance consommée par une station de base donnée B pour le mobile considéré TM fonctionnant en macrodiversité, $P_B$ étant la puissance d'émission de la station de base B pour le mobile TM et

-  le gain

$$G_2 = P_{noMD} / \sum_{i=1}^{N_{AS}} P_i$$

relatif à la puissance totale consommée pour le mobile considéré TM fonctionnant en macrodiversité et ayant des liens actifs avec $N_{AS}$ stations de base $B_i$ voisines de la station de base donnée.

Le collecteur CP transmet les puissances récupérées $P_{noMD}$ et les gains $G_1$ et $G_2$ au centre de maintenance OMC qui présente à l'opérateur du réseau RR un gain de macrodiversité estimé.

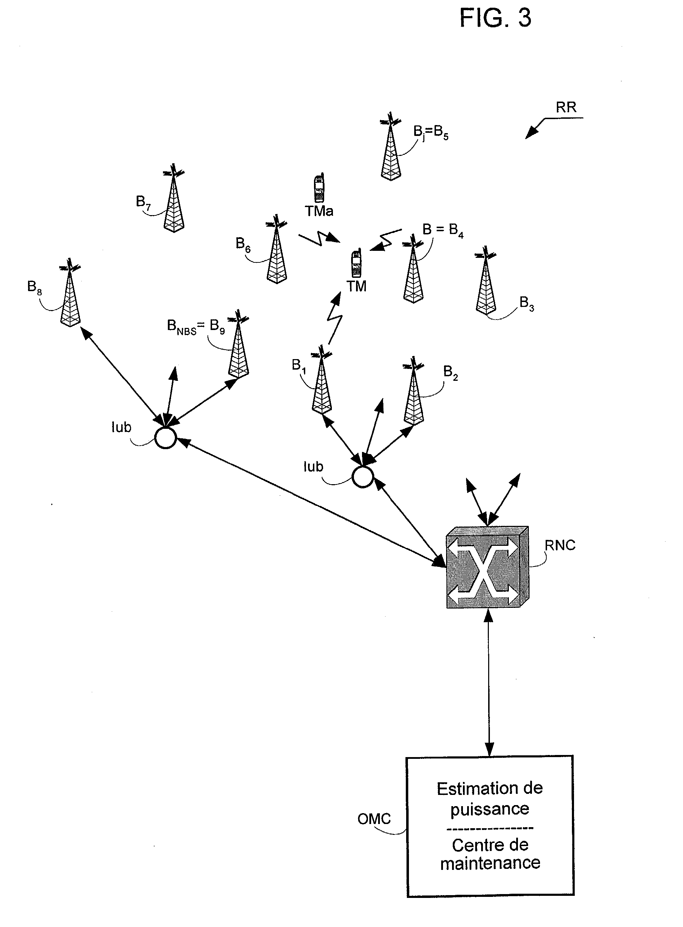

Selon une variante de l'invention montrée à la figure 3, l'estimateur de puissance ES est supprimé et les fonctionnalités d'estimation de l'estimateur de puissance ES sont incorporées au centre de maintenance OMC. Les mesures faites par le mobile TM et les stations de base sont remontées au centre de maintenance OMC à travers les contrôleurs de station de base RNC dans le réseau RR. Les puissances $P_{noMD}$ sont déterminées par le centre de maintenance OMC. Le centre de maintenance estime lui-même les gains $G_1$ et $G_2$.

Relativement aux figures 1 et 3, l'opérateur surveille ainsi finement dans le centre de maintenance OMC la capacité radio consommée par les mobiles en macrodiversité de tous les liens descendants de son réseau et décide au cas par cas si la macrodiversité est justifiée. Le cas échéant, les puissances récupérées $P_{noMD}$ servent à contrôler de manière optimale la répartition des puissances d'émission en macrodiversité des stations de base depuis les contrôleurs RNC du réseau.

L'invention décrite ici concerne un procédé et un moyen d'estimation de la puissance d'émission sans macrodiversité d'une station de base donnée dans un réseau opérationnel. Selon une implémentation préférée, les étapes du procédé sont déterminées par les instructions d'un programme d'estimation de la puissance d'émission sans macrodiversité d'une station de base donnée incorporé dans le moyen d'estimation de puissance d'émission qui peut être l'estimateur ES ou le centre de maintenance OMC. Le procédé selon l'invention est mis en oeuvre lorsque ce programme est chargé et exécuté dans le moyen d'estimation de puissance d'émission dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé selon l'invention.

**Revendications**

**1.** Procédé pour estimer la puissance d'émission sans macrodiversité ($P_{noMD}$) d'une station de base donnée (B) lorsque cette dernière est supposée seule avoir un lien actif descendant avec un mobile (TM) dans un réseau de radiocommunication opérationnel (RR) du type CDMA, selon lequel des atténuations entre des stations de base et le mobile sont déterminées dans le mobile, et des stations de base déterminent des puissances d'émission,
**caractérisé en ce que** les stations de base pour lesquelles des atténuations ($PL_i$) sont déterminées (E12, E22) dans le mobile (TM) sont relatives à des liens actifs avec le mobile afin que seules ces stations de base ($B_i$) déterminent (E11, E21) des puissances d'émission ($P_i$) pour lesdits liens actifs et les transmettent à un moyen d'estimation de puissance (ES; OMC) relié au réseau de radiocommunication (RR) et le mobile ne transmette que les atténuations ($PL_i$) déterminées pour lesdits liens actifs au moyen d'estimation de puissance, et le moyen d'estimation de puissance estime (E13, E23) la puissance d'émission sans macrodiversité ($P_{noMD}$) en fonction de l'atténuation ($PL_B$) déterminée dans le mobile (TM) relative au lien actif avec la station de base donnée (B) et d'une somme de rapports proportionnels chacun à la puissance d'émission ($P_i$) déterminée pour l'un respectif desdits liens actifs et inversement proportionnel à l'atténuation ($PL_i$) déterminée pour le lien actif respectif.

**2.** Procédé conforme à la revendication 1, selon lequel la puissance d'interférence pour chaque lien actif avec le mobile est supposée sensiblement égale à la puissance d'interférence reçue par le mobile fonctionnant sans macrodiversité, et la puissance d'émission sans macrodiversité ($P_{noMD}$) est le produit de l'atténuation ($PL_B$) relative au lien actif entre la station de base donnée (B) et le mobile et d'une somme de rapports chacun égal à la puissance d'émission ($P_i$) déterminée pour l'un respectif desdits liens actifs avec lesdites stations de base ($B_i$) sur l'atténuation ($PL_i$) déterminée pour le lien actif respectif.

**3.** Procédé conforme à la revendication 1, selon lequel chaque station de base ($B_i$) ayant un lien actif avec le mobile détermine (E21) sa puissance d'émission totale $p_i^{Tot}$ et la transmet avec la puissance d'émission $P_i$ pour le lien actif avec le mobile au moyen d'estimation de puissance, le mobile (TM) détermine (E22) également la puissance totale $R_{MD}$ reçue dans la bande de fréquence d'émission des stations de base reçue par le mobile et la transmet avec les atténuations $PL_i$ déterminées pour lesdits liens actifs et l'atténuation ($PL_B$) relative au lien actif avec la station de base donnée (B) au moyen d'estimation de puissance (ES; OMC), et le moyen d'estimation de puissance (ES; OMC) estime la puissance d'émission sans macrodiversité selon la formule suivante :

$$P_{noMD} = \sum_{i=1}^{N_{AS}} P_i \frac{PL_B R_{MD} + (\alpha - 1)P_B^{Tot}}{PL_i R_{MD} + (\alpha - 1)P_i^{Tot}}$$

où $N_{AS}$ désigne le nombre de liens actifs entre le mobile et lesdites stations de base ($B_i$), $P_B^{Tot}$ la puissance d'émission totale de la station de base donnée (B) lorsque le mobile fonctionne en macrodiversité et transmise par la station de base donnée (B) au moyen d'estimation de puissance (ES; OMC), et $\alpha$ un facteur d'orthogonalité entre codes de lien prédéterminé inférieur à 1.

**4.** Procédé conforme à l'une quelconque des revendications 1 à 3, selon lequel les puissances d'émission sans macrodiversité ($P_{noMD}$) des stations de base du réseau (RR) et les gains $G_1$ et $G_2$ sont transmis (E4) par le moyen d'estimation de puissance (ES; OMC) à un moyen de maintenance (OMC) du réseau pour surveiller la capacité radio consommée par les mobiles en macrodiversité de tous les liens descendants dans le réseau.

**5.** Moyen d'estimation de puissance (ES; OMC) pour estimer la puissance d'émission sans macrodiversité ($P_{noMD}$) d'une station de base donnée (B) lorsque cette dernière est supposée seule avoir un lien actif descendant avec un mobile (TM) dans un réseau de radiocommunication opérationnel (RR) du type CDMA, des atténuations entre des stations de base et le mobile étant déterminées dans le mobile, et des stations de base déterminant des puissances d'émission,
**caractérisé en ce que** les stations de base pour lesquelles des atténuations ($PL_i$) sont déterminées (E12, E22) dans le mobile (TM) sont relatives à des liens actifs avec le mobile afin que seules ces stations de base ($B_i$) déterminent (E11, E21) des puissances d'émission ($P_i$) pour lesdits liens actifs et les transmettent au moyen d'estimation de puissance et le mobile ne transmette que les atténuations ($PL_i$) déterminées pour lesdits liens actifs au moyen d'estimation de puissance, et le moyen d'estimation de puissance estime (E13, E23) la puissance d'émission sans macrodiversité ($P_{noMD}$) en fonction de l'atténuation ($PL_B$) déterminée dans le mobile (TM) relative au lien actif avec la station de base donnée (B) et d'une somme de rapports proportionnels chacun à la puissance d'émission ($P_i$) déterminée pour l'un respectif desdits liens actifs et inversement proportionnel à l'atténuation ($PL_i$) déterminée

pour le lien actif respectif.

6. Moyen d'estimation de puissance conforme à la revendication 5, relié à des interfaces terrestres (Iub) entre des contrôleurs de station de base (RNC) et des stations de base (B) du réseau (RR).

7. Moyen d'estimation de puissance conforme à la revendication 5, inclus dans un centre de maintenance (OMC) relié à des contrôleurs de station de base (RNC) du réseau (RR).

8. Programme d'ordinateur sur un support d'informations, ledit programme comportant des instructions de programme adaptées à la mise en oeuvre d'un procédé selon l'une quelconque des revendications 1 à 4, lorsque ledit programme est chargé et exécuté dans un moyen d'estimation de puissance (ES; OMC).

FIG. 1

# FIG. 2

E11 — $B_i \rightarrow [P_i] \rightarrow AP$

E21 — $B_i \rightarrow [P_i, P_i^{Tot}] \rightarrow AP$

$B \rightarrow [P_B, P_B^{Tot}] \rightarrow AP$

E12 — Mesurer $PL_i$, $PL_B$ dans TM
$TM \rightarrow [PL_i, PL_B] \rightarrow AP$

E22 — Mesurer $PL_i$, $PL_B$, $R_{MD}$ dans TM
$TM \rightarrow [PL_i, PL_B, R_{MD}] \rightarrow AP$

E13 — Estimer $P_{noMD}$ dans AP

E23 — Estimer $P_{noMD}$ dans AP

E4 — Estimer et récupérer tous les gains et les transmettre à OMC

Autre cycle
vers E11 ou E21

14

FIG. 3

**Office européen des brevets**

**RAPPORT DE RECHERCHE EUROPEENNE**

Numéro de la demande

EP 04 29 1716

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WANG L-C ET AL: "PERFORMANCE COMPARISONS OF POWER ALLOCATION MECHANISMS FOR DOWNLINK HANDOFF IN THE WCDMA SYSTEM WITH MICROCELLULAR ENVIRONMENTS" PROCEEDINGS 6TH. ACM INTERNATIONAL WORKSHOP ON MODELING, ANALYSIS AND SIMULATION OF WIRELESS AND MOBILE SYSTEMS. ACM MSWIM 2003. SAN DIEGO, CA, SEPT. 19, 2003, ACM INTERNATIONAL WORKSHOP ON MODELING, ANALYSIS AND SIMULATION OF WIRELESS AND MOBILE SYS, 19 septembre 2003 (2003-09-19), pages 2-10, XP001186200 ISBN: 1-58113-766-4 * alinéas [03.4], [0005]; figure 4 * ----- | 1,5,8 | H04B7/005 |
| A | US 6 553 016 B1 (ROXBERGH JAN) 22 avril 2003 (2003-04-22) * colonne 4, ligne 62 - colonne 5, ligne 43 * ----- | 1,5,8 | |
| D,A | Y. CHEN ET AL.: "Downlink performance of different soft handover algorithms in 3G multi-service environments" MOBILE AND WIRELESS COMMUNICATION NETWORK, 4TH INT'L WORKSHOP, 9 novembre 2002 (2002-11-09), pages 406-410, XP002305314 * alinéas [0003], [04.4] * ----- | 1,5,8 | **DOMAINES TECHNIQUES RECHERCHES (Int.Cl.7)** H04B |

Le présent rapport a été établi pour toutes les revendications

| Lieu de la recherche | Date d'achèvement de la recherche | Examinateur |
|---|---|---|
| Berlin | 12 novembre 2004 | Augarde, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 1716

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-11-2004

| Document brevet cité au rapport de recherche | | Date de publication | Membre(s) de la famille de brevet(s) | | Date de publication |
|---|---|---|---|---|---|
| US 6553016 | B1 | 22-04-2003 | AU | 2564101 A | 03-07-2001 |
| | | | GB | 2375931 A ,B | 27-11-2002 |
| | | | WO | 0147145 A2 | 28-06-2001 |
| | | | TW | 497344 B | 01-08-2002 |

EPO FORM P0460